# EUROPEAN PATENT SPECIFICATION

(11) **EP 1 789 284 B1**
(45) Date of publication and mention of the grant of the patent: **22.10.2008**
(21) Application number: 05771998.1
(22) Date of filing: 22.08.2005
(51) Int. Cl.: B60Q 1/068

(54) **LIGHT, ESPECIALLY FOR MOTOR VEHICLES**
SCHEINWERFER, BESONDERS FÜR KRAFTFAHRZEUGE
ÉCLAIRAGE SPÉCIAL POUR VÉHICULES À MOTEUR

(30) Priority: 01.09.2004 SI 200400240; 12.07.2005 SI 200500203
(43) Date of publication of application: 30.05.2007
(73) Proprietor: Hella Saturnus Slovenija, Proizvodnja svetlobne opreme za motorna in druga vozila, d.o.o., 1000 Ljubljana (SI)
(72) Inventor: KRALJ, Ales, 1000 Ljubljana (SI); CERAR, Luka, 1260 Ljubljana-Polje (SI); ADAMLJE, Ales, 1296 Sentvid pri Sticni (SI); JENKO, Rok, 1000 Ljubljana (SI); LUBI, Franc, 1230 Domzale (SI); TRCEK, Mihael, 1262 Dol pri Ljubljani (SI)
(74) Representative: Borstar, Dusan
(86) International application number: PCT/SI2005/000025
(87) International publication number: WO 2006/025804

(56) References cited:
- EP-A- 0 713 801
- EP-A- 0 990 843
- DE-A1- 4 133 527
- DE-A1- 10 224 187
- US-A- 5 003 436
- US-A1- 2004 070 988

## Description

The invention relates to illuminating and signalling equipment for motor vehicles, especially to headlights and fog lights. Furthermore, the invention relates to technical details, which may be applied by such headlights. Still further, the invention may also refer to details of commonly used illuminating devices, which relate to mounting of a light source or a bulb base.

The purpose of the invention is to create a light, which should comprise an uniform casing, consisting essentially of a single piece, and in which appropriate reflector together with the belonging light source is to be inserted, by which said light source should be inserted directly into said reflector and then sealed and firmly connected therewith, while the reflector, when placed together with the light source within said casing, needs to be pivotable arround a horizontal axis, which extends transversally with respect to the light beam direction, for at least such angle, that appropriate adjusting of a correct direction of the light beam upon mounting the light into a vehicle would be then enabled, and at the same time said casing needs to be sealed and herewith protected against any influences from the outside.

On such basis the purpose of the invention is, that despite to the fact, that the light source is rigidly mounted into the reflector and herewith also into an uniform polymeric casing, by which appropriate sealing of the light source and protection against entering of moisture and impurities into the light interior is then ensured, the possibility of adjustment of the light is given, by which said reflector and the belonging light source are firmly connected each to other and are then pivotable simultaneously. Such established assembly of said reflector and the light source must be pivotable at least in the vertical direction, namely around the horizontal axis, which extends transversally with respect to the light beam direction, and in at least such extent i.e. for such an angle, which is required for enabling of appropriate adjustment of the light when mounted in a desired position into a vehicle, and which is normally at least approx. 4° upwards and downwards.

Problems related to adjustment of a correct position of a light, which includes a light source placed within a coresponding light casing, are already discussed in various patent literature. A vehicle light is described in DE 36 16 694 C2 (Robert Bosch GmbH), which is mounted into a car body by means of a thermoplastic casing, which is mounted into a car body by means of resilient rests, which are equipped with internal threads and are pressed and arrested into appropriate cavities, which are available in a car body. A duroplastic reflector with incorporated light source is equipped with a glass, which is placed on the front side thereof, and attached to the casing by means of at least three threaded binding elements, which extend through said resilient rests. A flexible rim is inserted between the glass and the car body, which serves at the one side for protection against entering of moisture or impurities from the front side into the interior and the rearward portions of the light, and on the other side also for allowing certain displacements of the reflector with respect to the car body, which should enable adjustment of a correct position of the reflector. In this case the light source is displaced together with the reflector, which means, that by adjusting a correct position of the reflector all required optical characteristics in relationship between the light source and the reflector remain unchanged. On the other hand, such light consists of a casing and a reflector, which are separately, each per se, mounted into belonging portions of the car body and after that connected each to other by means of said threaded binding elements. Such concept of the light requires manufacturing of numerous parts, which is relatively expensive, while at the same time several problems still persist, like e.g. sealing of the reflector on the rear side, where at the same time the possibility of replacement of the light source must exist. Such problems can no doubt be solved in the praxis, however only by means of still additional parts like e.g. an additional cover, which should enable sealing and closing of an opening, which enables access to the light body, or similar measures.

Furthermore, FR 2 544 463 (AUTOMOBILES PEUGEOT) describes a vehicle light, where a pivotable reflector is placed within a casing, and a light source is placed within the reflector and is therefore pivotable therewith. In such a manner during pivoting the reflector all optical features in the reletionship between the reflector and the light source are maintained. However, such pivoting of the reflector is achieved in a very complicated manner. For the purposes of pivoting, said reflector is equiped with a special mounting assembly, by means of which the reflector is then pivoted around the horizontal axis transversally in respect to the light beam, and also around the vertical axis. Each desired movement of the reflector around said vertical axis is then achieved by means of appropriate transmission means, in particular via the so-called Bowden, while each desired displacement around the horizontal axis is obtained via a relatively complicated gear transmision, which consists of a gear rack placed on the mounting assembly as well as of a pair of parallel shafts with corresponding pairs of gear wheels placed on each side of the mounting assembly, and all these elements are then actuated by means of a further gear rack. All these parts are arranged in the interior of the light casing, on which moreover a large opening is available in order to enable replacement of the light source, and a cover for sealed closing this opening, while two regulation elements for pivoting of the reflector around horizontal and vertical axis protrude outside from said casing, by which one of them is connected to the Bowden, and the other is connected to the gear rack. It is therefore obvious, that a plurality of parts is required in order to realize such light.

Still further, EP 0 512 793 A2 (CARELLO LIGHTING PLC) describes a light, which includes a casing, in which a reflector is placed together with a light source inserted therein. Said reflector is pivotable mounted within the casing and may be pivoted around the horizontal axis and also around the vertical axis. Pivoting of the reflector around the horizontal axis in the transversal durection with respect to the light beam is achieved by means of a ball-ended pin, the female part of which is available on the reflector at an appoopriate distance apart from the rotation axis, while the male part is obtained by means of a ball-shaped protrusion as available on the adjusting screw, which is screwed into appropriate threaded bore in the casing. When said screw is rotated and displaced in the vertical direction, the reflector is pivoted around said horizontal direction. Said reflector is pivoted around the vertical axis by means of a threaded segment, which is placed on the rear side of the reflector and adapted for co-operation with a gear wheel, which is embedded in the casing and connected with appropriate adjusting means, which protrudes outside from the casing. The measures, by means of which the light is protected against influences from outside, are not explicitely disclosed, but it is obvious, that a kind of a protective cover should be used, which might be placed on the casing and adequately sealed, so that at the one hand the light source may be replaced, and on the other hand also appropriate protection of the light against moisture and impurities is then ensured.

Similar approach is mentioned in DE 36 20 800 (Robert Bosch GmbH); however in this variation the reflector, into which a light source is inserted and is pivotable together with the reflector, comprises at least two threaded rests, which are hinged thereto and into which then adjusting screws are threaded. At least one rest is arranged at appropriate distance apart from the vertical axis around which then the reflector, may be pivoted, and at least one rest is arranged at appropriate distance apart from the horizontal axis around which then the reflector may be pivoted. By means of rotation of each corresponding adjusting screw appropriate deflection of said reflector around the vertical and/or horizontal axis is then achieved. In order to enable insertion and replacement of the light source into reflector, which is pivoted togehter with said reflector, the casing is equipped with an opening, which is closed by means of a cover, which is sealed towards the casing. Also in this embodiment, which may in fact be manufactured in some easier manner like e.g. those previously described, still several parts are required in order to enable realization of the light and also appropriate adjustment of optical parameters.

Previously described lights essentially consist of a housing i.e. a casing, in which the reflector is placed, while on the casing there is an opening, through which the reflector may be inserted during completing the light, and which also serves for replacement of the light source, while after that the opening may be closed by means of an appropriate cover. Modern lights are mostly equipped with filament halide bulbs, which are commercially available and known to those skilled in the art under the references like H8, H10, H11, HB3, HB4 or similar; such light sources include polymeric base, which includes a sealed rest, and may therefore be inserted directly into each corresponding reflector or also directly into each corresponding light casing, so that placing the cover above the light source is no more required, and in addition, replacement of the light source is also essentially simplified. Inserting of the reflector is performed on the front side of the light or the casing thereof before placing of the protective glass onto the light casing. Upon that and in each case prior to exploitation of the vehicle, appropriate direction of the light beam must be adjusted, and for that purpose the reflector must be pivotably inserted within the casing in order to be deflected in appropriate extent around the horizontal axis, which extends transversally with respect to the light beam direction.

A further solution is already known in this context, which is described in EP 1 150 064 A1 (VALEO VISION) and relates to a light, in which the light source is inserted and firmly attached into an uniform polymeric casing, while on the other hand a reflector is placed within said casing, which is however pivotable around the horizontal axis, which extends transversally with respect to the light beam direction and through the center of the light source. Therefore, said reflector is pivotable with respect to the light casing and also with respect to the light source, which is firmly attached within said casing. Despite to several benefits resulting therefrom, such pivoting of the reflector with respect to the light source may often lead to change of optical characteristics, which correspond to optimum only in the central area between the pivotable reflector and fixed light source. Such deficiency also leads to serious restrictions by design of the light, since among various possible reflection surfaces only several shapes may be used in such case, which allow rotation of the reflector around the fixed light source.

DE 102 24 187 A1 describes a headlight of a motor vehicle, where a reflector with incorporated bulb is attached to the headlight housing via a resilient, preferably plastic attaching holder, which includes appropriate torsion elements, which enable displacements of the reflector around its vertical axis and therefore serve for the purposes of adjusting a desired position of the reflector relatively to the housing. In one of the embodiments said holder and the casing may be manufactured simultaneously and integrally as a uniform part, while in addition the central portion of the rear wall of the housing may be weakened for the purposes of enabling appropriate deviations of said holder. Said torsion elements of the holder protrude coaxially apart one from another in a transversal direction with respect to the longitudinal axis of the headlight, and the required torsion elasticity thereof determines in a great extent the behavior and characteristics of the complete molded part, either of the holder as such or also the integrated holder and headlight casing, when appropriate. As known, the bulb must normally be replaced from time to time, and of that reason the reflector can normally not be attached directly to the attaching holder, since the holder would then be placed behind the bulb, and replacement of the bulb in a normal manner from the rear side would then be impossible. Of that reason, in the practice the reflector should be connected to the attaching holder by means of an additional beam or ledge, which is firmly interconnected with the reflector and mounted to the holder by means of a central screw arranged between said torsion elements. Integration of such additional ledge means, that the reflector with incorporated bulb is attached to a cantilever of a corresponding length, so that the ledge must be pretty bulky in order to prevent vibrations of reflector and the bulb during the use, and which moreover unavoidable leads to additional expenses and risks, and in particular does not enable a desired minimizing of dimensions of such light.

US 2004/070988 A1 discloses a headlight, where the reflector is mounted within the casing, and the casing comprises a rearward opening, through which the bulb is inserted or may e.g. be replaced. For the purposes of sealing the headlight from the rear side, a boot is sealingly engaged both with the casing and the reflector. Thanks to said boot appropriate sealing is actually ensured also when reflector is displaced with respect to the casing, but at the same time the reflector must be supported by means of appropriate additional supporting and/or adjusting elements, which are actually not disclosed in the document at all. It is therefore obvious, that except of sealing no other correlations exist between the reflector and the housing. Quite similarly, EP 0 990 843 A2 also relates exclusively to sealing of a vehicle light by minimizing the space required therefore.

EP 0 713 801 A2 discloses a commonly used headlight, where a reflector us mounted into an circumferential seat of the housing, and a flexible thoroidal member is inserted between the reflector and the seat in order to enable displacements of the reflector. Reflector consists of its own housing and a separate rearward portion, in which the bulb is mounted. The housing of the reflector is held within a further circumferential resilient seat, which is also available in the headlight housing. Accordingly, the reflector is supported both in the middle area and in the rearward area of the headlight housing, so that such headlight housing is voluminous and moreover pretty complicated and expensive for manufacturing.

Still further, DE 41 33 527 A1 relates to a vehicle headlight, which includes a reflector, which is mounted into a headlight housing. Said reflector includes a radial, circumferentially extending rigid edge, which is pressed against a flexible seal, which is available on the belonging seat of the headlight housing, which is adapted for receipt of said reflector. An adjusting screw extends through said edge, by which the reflector is displaced in a desired manner. Thanks to said seal, reflector is allowed to be displaced, and simultaneously also a required sealing of the headlight is achieved. However, the seal is flexible and moreover, the flexibility is successively changing and depends on various conditions, so that such attempt normally results in displacement of the reflector from the desired i.e. previously adjusted position thereof after certain time period of use.

US A-5 003 436 describes a vehicle lamp, the body of which consists of a synthetic resin and has a recess opening in the front direction and a rear wall having an opening in the central portion. Reflector, which is arranged within said body, and supported therein at least twice by means of support shafts with spherical end portions and moreover also by means of adjusting screws and therefore by means of said elements attached to the lamp body. Said opening on the rearward portion serves for inserting of the bulb, and is normally closed by means of a flexible cover. As evident, several intermediate means must be included between the housing i.e. body and the reflector in order to enable desired displacements of the reflector.

The present invention relates to a light, especially for motor vehicles, which comprises a uniform i.e. a single-part casing, which consists of a polymeric material and into which an assembly of firmly interconnected reflector and light source is inserted.

According to the invention, the previously exposed problem is solved by features, which are included in characterising part of independent Claim 1 and subclaims. In this, said the reflector together with corresponding light source attached thereto is mounted directly to the elastically deformable and weakened rear wall of the casing, so that via appropriate regulation means said assembly of the reflector and light source is simultaneously pivotable around the transversal horizontal axis at least for such angle, which is required for appropriate adjusting of a correct direction of light beam upon mounting the light into a vehicle.

In this, pivoting of the reflector together with the light source attached thereto around the transversal horizontal axis is achieved by means of mounting the reflector together with the belonging light source
- either into a rigid receiving sleeve, which is available in an essentially resilient rear wall of the light casing;
- or into a resilient seat, which is available in a resilient rear wall of the light casing instead of into a resilient seat, which might be available in an essentially rigid rear wall of the light casing.

In the first embodiment of the invention a rear wall of the casing is foreseen, which includes a rigid receiving sleeve or a similar rigid part, into which the reflector with the light source firmly connected thereto may be inserted, by which thanks to at least one above the transversal horizontal axis arranged as well as to at least one below said axis arranged weakened portion said sleeve is pivotable arround said axis for an angle, which is required for adjusting of light beam direction after mounting the light into each vehicle. In this, two weakened surface portions are foreseen on the rear wall of the casing, which are arranged symmetricaly with respect to the transversal horizontal axis and in which thickness of the wall is essentially smaller than the thickness of the other portions of said wall or thickness of the circumferential wall or thickness of the receiving sleeve, wherein one of said weakened portions is arranged above, and the other weakened portion is arranged below said axis, and wherein each weakened portion extends at a sufficient distance apart from the circumferential wall as well as from the sleeve and is - when observed in the circular direction - also arranged at a sufficient distance apart from said transversal horizontal axis of the light. In one of possible variations of this embodiment of the invention between each weakened surface portion and the receiving sleeve at least one additional weakened bending portion is foreseen, which is available in form of U-shaped rim and in the area of which the thickness of the rear wall is essentially reduced, while optionally between each weakened surface portion and the circumferential wall at least one additional weakened bending portion is foreseen, which is available in form of U-shaped rim and in the area of which thickness of the rear wall is essentially reduced. Each weakened surface portion consists of a plurality of plate-like segments and between each two neighboring segments at least one radially extending weakened portion is foreseen, in the area of which the thickness of the rear wall is essentially reduced. Furthermore, two radially apart extending ribs are foreseen on the rear wall of the casing, which serve for the purposes of enhancement of stiffness of the casing with respect to the vertical axis. The complete casing, including the weakened surface portions, consists of a material or a polymeric composite, which belongs to the group, consisting of polycarbonates, co-polymers of polycarbonate, blends of polycarbonate, polyether imide, blend of polyether imide, polybutylenteraphtalate, co-polymeres of polybutylenterephtalate and blends of polybutylenterephtalate, as well as polypropilene and polypropylenterephtalate, while such casing with weakened rear wall belongs to a motor vehicle headlight or optionally to a motor vehicle fog light.

Alternatively, two weakened surface portions might also be foreseen on the rear wall of the casing, which should consist of a material, which is different as the material of the rear wall and other portions of the casing. Said weakened surface portions should preferably consist of material with essentially higher elastic deformability in respect to material of the rear wall or of any other portion of the casing. These weakened surface portions should be available in form of separately manufactured segments, which would be attached to the rear wall of the casing by means of adhesive or by means of welding or by means of vulcanization, where appropriate, or even also in form of segments, which should be formed on the rear wall by means of thermoplastic material, which is moulded in appropriate mould on a previously manufactured casing.

Still further alternative concerns the assembly of mutually connected and simultaneously pivotable reflector and light source, which is mounted into a resilient seat, which consists of a rest, which is available in the rear wall of the casing, as well as of a resilient element, which is placed into said seat and adapted for co-operation with the corresponding portion of the reflector or with the corresponding portion of the light source. Said rest can be available on the rigid receiving sleeve like in the previous embodiments of the invention. However, the resilient element may also be a layer of a resilient plastics, which is available between the casing and the assembly of the reflector and the light source, or a seal, especially a thoroidal seal or a collar seal..

Now the invention will be described in more detail on the basis of the embodiments, which are shown in the attached drawings, where
- Fig. 1: is a rear view of an embodiment of the light according to the invention:
- Fig. 2: is a cross-section in the plane A - A according to Fig. 1;
- Fig. 3: is a rear view of a variation according to Fig. 1 and 2;
- Fig. 4: is a rear perspective view of an alternative embodiment;
- Fig. 5: is a longitudinal cross-section of the light according to Fig. 4;
- Fig 6: is a schematically shown light according to the invention;
- Fig 7: is a schematically shown light according to Figs. 4 and 5, when the asssembly of the reflector and the light source is pivoted downwards;
- Fig 8: is a schematically shown light according to Figs. 4 and 5, when the asssembly of the reflector and the light source is pivoted upwards;
- Fig. 9: is the rear perspective view of a further alternative of the invention;
- Fig. 10: is a longitudinal cross-section of the light according to Fig. 9;
- Fig. 11: is a perspective view of the light according to Figs. 9 and 10; and
- Fig. 12: is a longitudinal cross-section of a still further variation of the light according to Figs. 9 and 10.

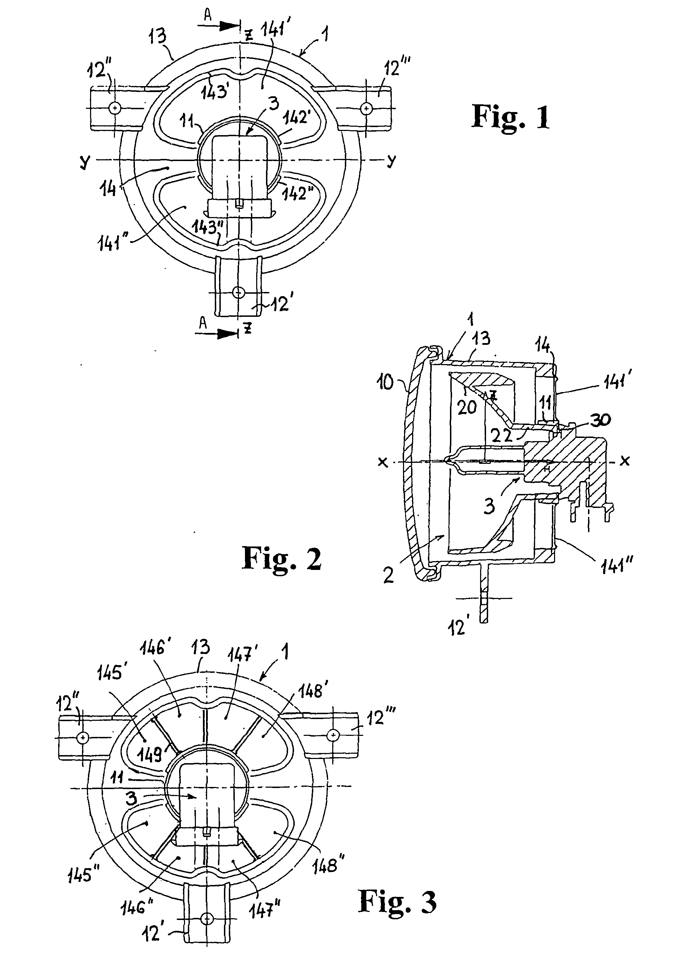

A light basically consists of an uniform casing 1, in which a reflector 2 is inserted at the front side (i.e. from the left towards the right side according to Fig. 2), and then in such established assembly a light source 3 is inserted at the rear side (i.e. from the right toward the left side according to Fig. 2).

Upon inserting the reflector 2 at the front side, the casing 1 is closed and sealed by means of a security glass 10, so that moisture and waste are prevented from entering into the casing 1 from the front side thereof. In the rearward portion i.e. in the area of the rear wall 14, said casing 1 comprises an essentially cylindrical and rigid receiving sleeve 11, which is adapted for mounting the reflector 2 together with the belonging light source 3 into the casing 1, while the casing 1 and herewith the light is mounted into a vehicle by means of attaching protrusions 12', 12" and 12"'. A circumferential wall 13 of the casing 1 may be preferably tubular, but may also be otherwise shaped without any essential impact to the invention as such; however, said wall 13 needs to be sufficiently rigid in order to enable a firmly attachment of the casing 1 to each particular position within a vehicle by means of said attaching protrusions 12', 12" and 12"' or any other attaching means.

In addition to appropriate reflection surface 20, which is adapted in respect of its shape and any other optical characteristics for co-operation with each desired light source 3, said reflector 2 comprises an attaching neck 22, which is inserted c.g. pressed into the receiving slccvc 11 of the casing 1, so that the reflector 2 is positioned in appropriate manner with respect to the casing 1 and also connected therewith.

The light source 3 - in the shown embodiment a commonly used and commercially available halide bulb H11 equiped with a filament and a sealed mounting portion 30 is applied - is inserted into said neck 22 of the reflector 2, so that also on the rear side the light is sealed and protected against entering moisture and impurities towards the interior of the casing 1.

A required deflection of the reflector 2 together with the light source 3 placed therein arround the horizontal axis y - y, which extends transversally with respect to the longitudinal axis x - x, which may completely or at least approximately coincide with a direction of a light beam in respect of the casing 1, is according to the invention established by means of a typical concept of the rear wall 14 of the casing 1, in the area of which said reflector 2 together with the belonging light source 3 is mounted into a casing 1. In this particular embodiment (Fig. 1 and 2) said rear wall 14 includes weakened portions 141', 141", in which the wall thickness is essentially reduced in comparison with the thickness of the other portions of the rear wall 14. Said weakened portions 141', 141" are arranged symmetrically with respect to the transversal horizontal axis y - y, so that one weakening portion 141 is foreseen above, and the other weakening portion 141" is foreseen below the axis y - y. Said weakening portions 141', 141" are arranged adjacent to the receiving sleeve 11 of the casing 1 and extend essentially in the circumferential direction over the majority of the rear wall 14, however are in each case arranged at a sufficient distance from the rigid circumferential wall 13, and also - when observed in the circumferential direction - at a sufficient distance from the transversal horizontal axis y - y.

In one of possible variations of the invention between each weakening portion 141', 141" and the rigid circumferential wall 13 there is an additional weakened bending portion 143', 143", while between the rigid receiving sleeve 11 of the casing 1 in the rear wall 14 of the casing 1 an additional weakened portion 142', 142" (Fig. 1) is foreseen.

Each additional weakened portion 142', 142" and 143', 143" is available in either in form of a rim, preferrably U-shaped rim or an U-shaped groove or an U-shaped elevation with slightly rounded edges. Thickness of the wall 14 in the area of said weakened portions 142', 142" and 143', 143" is reduced similar like in the area of weakened portions 141', 141". The casing 1 (i.e. a uniform piece) consists of a polymeric material, especially of polycarbonate (PC) or polycarbonate co-polymer (CO-PC), and in particular of butyleneterephtalate (PBT) reinforced with max. 15% glass fibers. Although the thickness of circumferential wall 13 and non-weakened portions of the rear wall 14 in the area of axis y - y or in its adjacency, as well as in the area of attaching protrusions 12', 12", 12"' or any other attaching means, is relatively large in order to ensure appropriate stiffness of the casing 1, the thickness of the rear wall 14 is locally, namely in the area of weakened portions 141', 141" and optionally also in the area of additional weakened portions 142', 142" and 143', 143" essentially reduced, preferrably in such extent, that moulding of a thermoplastic polymer is still possible.

Thanks to such concept of the casing 1, namely of the rear wall 14 thereof, and despite to a required global stiffness of the casing 1 a sufficient elasticity and deformability of the rear wall 14 in the area of local weakened portions 141', 141" and optionally also in the area of additional weakened portions 142', 142" and 143', 143" is ensured, so that the rigid receiving sleeve 11 together with the reflector 2, which is firmly connected therewith, and the light source 3, which is firmly connected with said reflector 2, may be then pivoted around the transversal horizontal axis y - y of the casing 1 i.e. the light by means of appropriate regulation means 200. Accordingly, the light consisting of previously mentioned material (CO-PC), where the diameter of the circumferential wall 13 is approx. 70 mm and thickness of said wall 13 approx. 1,7 mm, while the thickness of the rear wall 14 is approx. 1 mm and in the area of weakening portions 141', 141" approx. 0,25 mm, enables pivoting of the sleeve 11 and herewith also the reflector 2 together with the lightning source 3 for about 4° upwards or downwards, which is according to the existing standards quite sufficient for the purposes of regulation of the light.

In common, stiffness of the casing 1 in respect of pivoting arround the certical axis x - x may still be increased by means of reinforcing ribs, which are not shown in the drawing and may be arranged diametrically on the inner side of the rear wall 14 in order to extend between the rigid sleeve 11 and the circumferential wall 13.

A further variation of such light is foreseen according to the invention, which is shown in Fig. 3 and in which the weakened portions 141', 141" are also arranged symmetrically with respect to the transversal horizontal axis y - y and consist of a certain number of plate-like segments 145', 145", 146', 146", 147', 147", 148', 148", where each two adjacent segments 145', 145", 146', 146", 147', 147", 148', 148" are separated apart from each other by means of radially extending weakened portion 149. Such waekened portions 149 may be realized in a quite similar manner like e.g. said additional weakened portions 142', 142" oz. 143', 143", namely in form of U-shaped rims or U-shaped grooves or U-shaped elevations with slightly rounded edges. Thickness of the rear wall 14 may also be essentially reduced in the area of said plate-like segments 145', 145", 146', 146", 147', 147", 148', 148", in a quite similar manner like e.g. by previously mentioned weakened portions 141', 141 ", which is however not compulsory, so that said thicknes may also depend on choice of materials or other parameters during manufacturing of the casing 1.

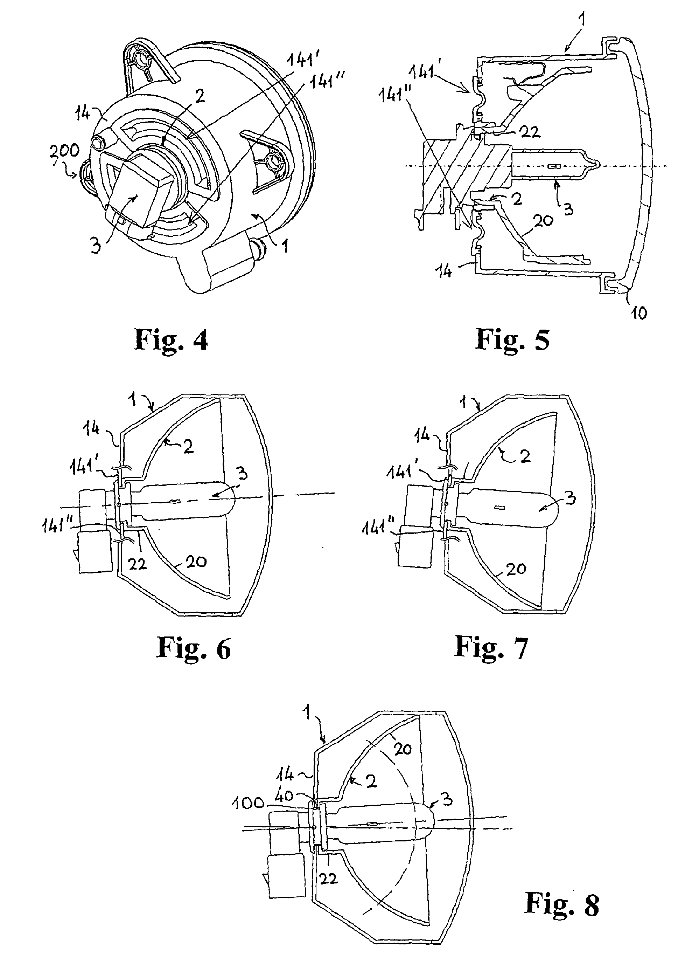

An alternative of the light according to the invention is shown in Figs 4 and 5 and may be applied, when the casing 1 consists of a thermoplastic material and the thickness of the rear wall 14 of the casing 1 is relatively small, so that still further reducing of said thickness in the area of weakened portions 141', 141" might lead to problems during manufacturing the casing 1 due to viscosity of molten plastics when flowing along the mould or due to early cooling thereof or also due to any other problems of technical or even economical nature. Of that reasons, in this alternative embodiment weakened portions 141', 141 ", which re foreseen on the rear wall 14 of the casing 1, consist of appropriate material, which is however different as the material of the rear wall 14 and orher portions of the casing 1. Accordingly, such weakened portions 141', 141" may preferrably consist of a resilient material with much higher elastic deformability as e.g. deformability of material of the rear wall 14 and other portions of the casing 1. In the shown embodiment two weakened portions 141', 141" are foreseen, which are manufactured separately and then attached to the rear wall 14 of the casing either by means of adhesive or welding or vulcanization, or even as segments, which are realized by means of plastics, which is subsequently moulded to the rear wall 14 of a previously molded i.e. semi-manufactured casing 1 when placed into appropriate mould.

Also in this alternative embodiment the reflector 2 and the light source 3 are in their assembled state - i.e. firmly connected each to other - inserted into the casing 1 (Fig. 6) and may after that be thanks to said weakened portions 141', 141" on the rear wall 14 pivoted either upwards (Fig. 7) or downwards (Fig. 8), by which however the casing 1 is permanently protected against the influences from outside.

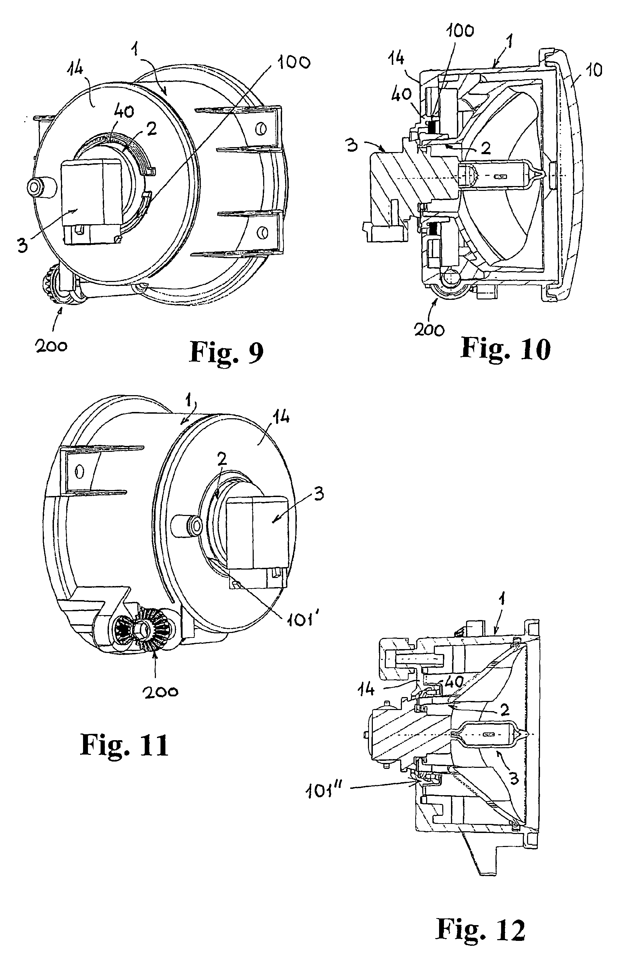

A still further alternative of the light according to the invention is shown in Figs. 9 to 12 and relates to a light, where the assembly of reflector 2 and light body 3 is mounted on the rear wall 14 of the casing 1, and said rear wall 14 is relativelly rigid, or the elastical deformability thereof is relatively pure, respectivelly. In this particular situation a resilient i.e. elastically deformable seat 4 is foreseen within the said rear wall 14, in which said assembly of mutually in a firmly manner interconnected reflector 2 and light source 3 is then inserted. Said resilient seat 4 consists of a rest 40, which is available on the rear wall 14 of the casing 1, as well as of a resilient element 100, which is placed within the said rest 40 and adapted for co-operation either with the belonging surface portion of the reflector 2 or with the corresponding surface portion of the lightning source 3. Said rest 40 may generally also be foreseen on the rigid sleeve 11, when available. In one of possible variations (Fig. 10) said resilient element 100 may be realized by means of a layer of a resilient thermoplastic material, which is inserted in appropriate manner between the casing 1 and said assembly of the reflector 2 and the light source 3. Still further variations may also be used, by which said resilient element 100 is a seal, e.g. a thoroidal seal 101' (Fig. 11) or a collar seal 101" (Fig. 12), by means of which then the interior of the light is permanently protected against the influences from outside.

## Claims

1. Light, especially for motor vehicles, comprising a uniform casing (1), which consists of a polymeric material and into which a reflector (2) is inserted from the front side, wherein said casing (1) further comprises a circumferential wall (13), which is sufficiently rigid in order to enable a firmly attachment of said casing (1) into each vehicle, as well as a rear wall (14) with an essentially cylindrical and appropriately rigid receiving sleeve (11), into which said reflector (2) is inserted with an attaching neck (22), and wherein the rear wall (14) is equipped with two weakened portions (141', 141") in which the wall thickness is essentially reduced in comparison with the thickness of the other portions of the rear wall (14) and which are arranged symmetrically with respect to the transversal horizontal axis (y - y) of the casing (1), by which one weakened portion (141') is foreseen above, and the other weakened portion (141") is foreseen below the axis (y - y), **characterized in that** the light source (3) is inserted into said a neck (22) of said reflector (2) from the rear side of said casing (1).

2. Light according to Claim 1, **characterized in that** the weakened portions (141', 141 ") are arranged adjacent to the receiving sleeve (11) of the casing (1) and extend essentially in the circumferential direction over the majority of the rear wall (14) but are in each case arranged at a sufficient distance from the rigid circumferential wall (13), and also - when observed in the circumferential direction - at a sufficient distance from the transversal horizontal axis (y - y).

3. Light according to Claim 1 or 2, **characterized in that** between each weakened surface portion (141', 141") and the receiving sleeve (11) at least one additional weakened bending portion (142', 142") is foreseen, which is available in form of U-shaped rim and in the area of which the thickness of the rear wall (14) is essentially reduced.

4. Light according one of the preceding Claims, **characterized in that** between each weakened surface portion (141', 141") and the circumferential wall (13) at least one additional weakened bending portion (143', 143") is foreseen, which is available in form of U-shaped rim and in the area of which the thickness of the rear wall (14) is essentially reduced.

5. Light according one of the preceding Claims **characterized in that** each weakened surface portion (141', 141") consists of a plurality of plate-like segments (145', 145"; 146', 146"; 147', 147"; 148', 148"), and that between each two neighboring segments (145', 145"; 146', 146"; 147', 147"; 148', 148") at least one radially extending weakened portion (149) is foreseen, in the area of which the thickness of the rear wall (14) is essentially reduced.

6. Light according to one of the preceding Claims, **characterized in that** the complete casing (1), including the weakened surface portions (141', 141 "), consists of a material or a polymeric composite, which belongs to the group, consisting of polycarbonates, co-polymers of polycarbonate, blends of polycarbonate, polyether imide, blend of polyether imide, polybutylenteraphtalate, co-polymeres of polybutylenterephtalate and blends of polybutylenterephtalate, as well as polypropilcne and polypropylenterephtalate.

7. Light according to one of the preceding Claims, **characterized in that** the casing (1) with weakened rear wall (14) belongs to a motor vehicle fog light.

## Patentansprüche

1. Scheinwerfer, besonders für Kraftfahrzeuge, umfassend ein einheitliches Gehäuse (1), das aus einem polymerischen material besteht und in das ein Reflektor (2) von der Vorderseite her eingesetzt wird, wobei das genannte Gehäuse (1) eine Umfangswand (13) umfasst, die ausreichend steif ist, um eine ausreichende Befestigung des genannten Gehäuses (1) in jeweiligem Fahrzeug zu ermöglichen, sowie eine Hinterwand (14) mit einer im wesentlichen zylindrischen und ausreichend steifen Aufnahmehülse (11), in die der genannte Reflektor (2) mit Hilfe eines Befestigungshals (22) eingesetzt wird, und wobei die Hinterwand (14) mit zwei abgeschwächten Bereichen (141', 141") ausgerüstet ist, in welchen die Wanddicke im Vergleich mit der Dicke der anderen Teile der Hinterwand (14) wesentlich reduziert ist und die symmetrisch in Bezug auf die horizontale Querachse (y - y) des Gehäuses (1) angeordnet sind, wobei ein abgeschwächter Teil (141') oberhalb der Achse (y - y) und der andere Teil (141") unterhalb der Achse (y - y) angeordnet ist, **dadurch gekennzeichnet, dass** die Lichtquelle (3) in den genannten Befestigungshals (22) des Reflektors (2) von der Hinterseite des Gehäuses (1) her eingesetzt ist.

2. Scheinwerfer nach Anspruch 1, **dadurch gekennzeichnet, dass** die abgeschwächten Teile (141', 141") angrenzend an die Aufnahmehülse (11) des Gehäuses (1) angeordnet sind und sich in der Umfangsrichtung im wesentlichen entlang des überwiegenden Bereiches der Hinterwand (14) erstrecken, jedoch in jedem Fall in ausreichender Entfernung von der steifen Umfangswand (13) angeordnet sind, und ebenfalls - wenn in der Umfangsrichtung gesehen - in ausreichender Entfernung von der horizontalen Querachse (y - y) angeordnet sind.

3. Scheinwerfer nach Anspruch 1 oder 2, **dadurch gekennzeichnet, dass** zwischen jedem abgeschwächten Teil (141', 141") der Oberfläche und der Aufnahmehülse (11) mindestens ein zusätzlicher gebogener abgeschwächter Oberflächenteil (142', 142") vorgesehen ist, der in Form eines U-förmigen Randes zur Verfügung steht und in dessen Gebiet die Dicke der Hinterwand (14) wesentlich reduziert ist.

4. Scheinwerfer nach einem der vorhergehenden Ansprüche, **dadurch gekennzeichnet, dass** mindestens ein zusätzlicher gebogener abgeschwächter Teil (142', 142") zwischen jedem abgeschwächten Oberflächenteil (141', 141") und der Umfangswand (13) vorgesehen ist, der in Form eines U-förmigen Randes zur Verfügung steht und in dessen Gebiet die Dicke der Hinterwand (14) wesentlich reduziert ist.

5. Scheinwerfer nach einem der vorhergehenden Ansprüche, **dadurch gekennzeichnet, dass** jeder abgeschwächte Oberflächenteil (141', 141") aus einer Vielzahl von plattenähnlicher Segmente (145', 145"; 146', 146"; 147', 147"; 148', 148") besteht, und dass zwischen jeweils zwei benachbarten Segmente (145', 145"; 146', 146"; 147', 147"; 148', 148") mindestens ein sich radial erstreckender abgeschwächter Teil (149) vorgesehen ist, in dessen Gebiet die Dicke der Hinterwand (14) wesentlich reduziert ist.

6. Scheinwerfer nach einem der vorhergehenden Ansprüche, **dadurch gekennzeichnet, dass** das vollständige Gehäuse (1), einschließlich der abgeschwächten Oberflächenteile (141', 141"), aus einem Material oder einem polymerischen Verbundwerkstoff besteht, das zur Gruppe gehört, die aus Polycarbonaten, Copolymeren von Polycarbonate, einer Mischung von Polycarbonaten, Polyetherimid, einer Mischung von Polyetherimiden, Polybutylenterephtalat, Copolymeren von Polybutylenterephtalat und Mischungen von Polybutylenterephtalat, sowie aus Polypropylen und Polypropylenterephtalat besteht.

7. Scheinwerfer nach einem der vorhergehenden Ansprüche, **dadurch gekennzeichnet, dass** das Gehäuse (1) mit der abgeschwächten Hinterwand (14) zu einer Nebelleuchte eines Kraftfahrzeugs gehört.

## Revendications

1. Éclairage spécial pour véhicules a moteur, comprenant un boitier uniforme (1), qui est composé d'un matériau polymérique et dans lequel est inséré un réflecteur (2) à partir du côté avant, où ledit boitier (1) comprend en outre une paroi circonférentielle (13), qui est suffisamment rigide pour permettre une fixation solide dudit boitier (1) dans chaque véhicule, ainsi qu'une paroi arrière (14) avec un manchon de réception (11) essentiellement cylindrique et à peu près rigide, dans lequel manchon est inséré ledit réflecteur (2) grâce à un collet (22) de fixation, et où la paroi arrière (14) est équipée de deux parties affaiblies (141', 141") dans lesquelles l'épaisseur de la paroi est essentiellement réduite en comparaison avec l'épaisseur des autres parties de la paroi arrière (14) et qui sont disposées de façon symétrique par rapport à l'axe horizontal transversal (y - y) du boitier (1), où une partie affaiblie (141') est prévue au dessus de l'axe (y - y) et l'autre partie affaiblie (141") est prévue en dessous de l'axe (y y), **caractérisé en ce que** la source de lumière (3) est insérée dans ledit collet (22) dudit réflecteur (2) à partir du côté arrière dudit boitier (1).

2. Phare selon la revendication 1, **caractérisé en ce que** les parties affaiblies (141', 141") sont disposées de façon adjacente par rapport au manchon (11) de réception du boitier (1) et s'étendent essentiellement dans la direction circonférentielle sur la plus grande partie de la paroi arrière (14), mais lesdites parties sont disposées dans tous les cas à une distance suffisante de la paroi circonférentielle rigide (13), et sont disposées également - lorsqu'on regarde dans la direction circonférentielle - à une distance suffisante de l'axe horizontal transversal (y - y).

3. Phare selon la revendication 1 ou 2, **caractérisé en ce qu'**on a prévu entre chaque partie de surface affaiblie (141', 141") et le manchon de réception (11) au moins une partie pliée affaiblie supplémentaire (142', 142"), qui est disponible sous la forme d'un bord en forme de U et où, dans la zone dudit bord, l'épaisseur de la paroi arrière (14) est essentiellement réduite.

4. Phare selon une des revendications précédentes, **caractérisé en ce qu'**on a prévu entre chaque partie de surface affaiblie (141', 141") et la paroi circonférentielle (13) au moins une partie pliée affaiblie supplémentaire (143', 143") , qui est disponible sous la forme d'un bord en forme de U et où, dans la zone dudit bord, l'épaisseur de la paroi arrière (14) est essentiellement réduite.

5. Phare selon une des revendications précédentes, **caractérisé en ce que** chaque partie de surface affaiblie (141', 141") est composée d'une pluralité de segments ressemblants à des plaques (145', 145"; 146', 146"; 147', 147"; 148', 148"), et **en ce que** qu'on a prévu entre chacun des deux segments voisins (145', 145"; 146', 146"; 147', 147"; 148', 148") au moins une partie affaiblie (149) s'étendant de façon radiale, et où, dans la zone de ladite partie, l'épaisseur de la paroi arrière (14) est essentiellement réduite.

6. Phare selon une des revendications précédentes, **caractérisé en ce que** le boitier (1) complet, les parties de surface affaiblies (141', 141") incluses, est composé d'un matériau ou d'un composite polymérique, lequel matériau ou lequel composite appartient au groupe composé de polycarbonate, de copolymères de polycarbonate, mélanges de polycarbonates, de polyéthérimide, mélanges de polyéthérimides, de polybutylènetéréphtalate, de copolymères de polybutylènetéréphtalate et d'un mélange de polybutylène - téréphtalates, ainsi que de polypropylène et de polypropylène - téréphtalate.

7. Phare selon une des revendications précédentes, **caractérisé en ce que** le boitier (1) avec la paroi arrière affaiblie (14) fait partie d'un feu arrière de brouillard d'un véhicule automobile.
